# EUROPÄISCHE PATENTSCHRIFT

(11) **EP 3 484 735 B1**
(45) Veröffentlichungstag und Bekanntmachung des Hinweises auf die Patenterteilung: **24.03.2021**
(21) Anmeldenummer: 17737816.3
(22) Anmeldetag: 12.07.2017
(51) Int. Cl.: B60J 7/02, B62D 25/06

(54) **VERFAHREN ZUM HERSTELLEN EINES FAHRZEUGDACHS, MODULDACH FÜR EIN FAHRZEUGDACH UND FAHRZEUGDACH FÜR EIN KRAFTFAHRZEUG**
METHOD FOR PRODUCING A VEHICLE ROOF, MODULAR ROOF FOR A VEHICLE ROOF, AND VEHICLE ROOF FOR A MOTOR VEHICLE
PROCÉDÉ DE FABRICATION D'UN TOIT DE VÉHICULE, TOIT MODULAIRE POUR TOIT DE VÉHICULE ET TOIT DE VÉHICULE POUR VÉHICULE À MOTEUR

(30) Priorität: 14.07.2016 DE 102016112960
(43) Veröffentlichungstag der Anmeldung: 22.05.2019
(73) Patentinhaber: Webasto SE, 82131 Stockdorf (DE)
(72) Erfinder: PIKE, Matthew, 82131 Stockdorf (DE); SCHÖNBERGER, Michael, 82131 Stockdorf (DE); HAAS, Josef, 82131 Stockdorf (DE); BURKHARDT, Florian, 82131 Stockdorf (DE); HÜTTEL, Philipp, 82131 Stockdorf (DE); BERTSCH, Robert, 82131 Stockdorf (DE)
(74) Vertreter: Epping - Hermann - Fischer
(86) Internationale Anmeldenummer: PCT/EP2017/067569
(87) Internationale Veröffentlichungsnummer: WO 2018/011274

(56) Entgegenhaltungen:
- CN-A- 104 553 698
- DE-A1- 10 212 241
- DE-A1-102007 012 486
- DE-A1-102012 023 098
- US-A1- 2010 066 130

## Beschreibung

Einige Kraftfahrzeuge weisen Fahrzeugdächer mit einem oder mehreren Deckeln auf, die beispielsweise als fest integrierte Glaselemente eine Durchsicht durch das Fahrzeugdach erlauben oder beweglich ausgebildete Komponenten sind, um wahlweise ein Freigeben und Verschließen einer Öffnung in dem Fahrzeugdach ermöglichen. Bei einem Herstellen eines solchen Fahrzeugdachs mit mehreren Dachmodulen werden die Dachmodule zum Beispiel mittels eines gemeinsamen Rahmens mit einer Karosserie des Kraftfahrzeugs verbunden. Ein solches Ausbilden eines Fahrzeugdachs ist zum Beispiel in dem Dokument EP 2020367 A2 beschrieben Das Dokument CN 104 553 698 A offenbart ein derartiges Moduldach.

Es ist eine Aufgabe, die der Erfindung zugrunde liegt, ein Verfahren zum Herstellen eines Fahrzeugdachs sowie ein Moduldach für ein Fahrzeugdach zu schaffen, die eine materialsparende und kostengünstige Konstruktion eines Fahrzeugdachs mit flacher Bauweise ermöglichen.

Die Aufgabe wird durch die Merkmale der unabhängigen Patentansprüche gelöst. Vorteilhafte Weiterbildungen sind in den Unteransprüchen angegeben.

Ein erfindungsgemäßes Verfahren zum Herstellen eines Fahrzeugdachs für ein Kraftfahrzeug umfasst ein Bereitstellen eines ersten Dachmoduls mit einem Rahmenelement und einem Dachelement, das mit dem Rahmenelement so gekoppelt ist, dass das Dachelement relativ zu dem Rahmenelement bewegbar ist.

Das Rahmenelement ist als tragendes Kopplungselement für das erste Dachmodul ausgebildet, um das erste Dachmodul an einer Karosserie des Kraftfahrzeugs anbringen zu können. Das Verfahren umfasst weiter ein Bereitstellen eines tragrahmenlosen, zu dem ersten Dachmodul separaten zweiten Dachmoduls. Das Verfahren umfasst weiter ein Umschäumen eines Rands des zweiten Dachmoduls an einer vorgegebenen Position und ein Koppeln zweiten Dachmoduls mit dem ersten Dachmodul und dadurch Ausbilden eines Moduldachs. Dabei wird bezogen auf eine Längsachse des herzustellenden Fahrzeugdachs ein hinterer Abschnitt des Rahmenelements des ersten Dachmoduls mit dem umschäumten vorderen Rand des zweiten Dachmoduls gekoppelt.

Das beschriebene Verfahren ermöglicht eine materialsparende und kostengünstige Konstruktion eines Fahrzeugdachs und trägt mit der beschriebenen Kopplung der Dachmodule zu einem platzsparenden Aufbau für das Fahrzeugdach bei.

Das Rahmenelement ist insbesondere als tragendes Kopplungselement für das erste Dachmodul realisiert, um dieses an einer Karosserie des Kraftfahrzeugs anbringen zu können. Das Rahmenelement des ersten Dachmoduls ist beispielsweise als Metallrahmen, insbesondere Stahlrahmen, realisiert, welcher das Dachelement des ersten Dachmoduls vollumfänglich umgibt. Darüber hinaus bildet der hintere Abschnitt des Rahmenelements eine Schnittstelle zur Kopplung mit dem zweiten Dachmodul aus.

Das zweite Dachmodul weist im Gegensatz zu dem ersten Dachmodul kein solches Rahmenelement auf und ist demgemäß als rahmenloses Dachmodul ausgebildet. Somit weisen die beiden Dachmodule keinen gemeinsamen Rahmen auf, welcher die Dachmodule miteinander koppelt. Bezogen auf die Längsachse des herzustellenden Fahrzeugdachs und eine übliche Fahrtrichtung eines zugehörigen betriebsbereiten Kraftfahrzeugs sind die beiden gekoppelten Dachmodule in dem ausgebildeten Moduldach hintereinander angeordnet. Das erste Dachmodul kann somit auch als vorderes und das zweite Dachmodul als hinteres Dachmodul bezeichnet werden. Insbesondere ist das Moduldach folglich so ausgebildet, dass eine hintere Kante des Rahmenelements des vorderen Dachmoduls mit einer vorderen umschäumten Kante des hinteren Dachmoduls gekoppelt ist.

Dabei kann die ausgebildete Umschäumung eine separate Umschäumung an dem vorderen Rand des zweiten Dachmoduls realisieren oder auch vollumfänglich ausgeführt sein und eine Art Kunststoffrahmen am seitlichen Rand des zweiten Dachmoduls ausbilden. Ein solcher Umschäumungsrahmen ist aber hinsichtlich Funktion und Eigenschaften von dem Rahmenelement des ersten Dachmoduls zu unterscheiden. Eine an dem zweiten Dachmodul seitlich ausgebildete Umschäumung kann eine Aufnahmemöglichkeit für Führungselemente, wie Führungsschienen, ausbilden und insbesondere eine Anbindung des zweiten Dachmoduls an einer Karosserie des Kraftfahrzeugs ermöglichen.

Die beiden Dachmodule sind insbesondere an ihrer Kopplungsschnittstelle (realisiert durch den hinteren Abschnitt des Rahmenelements und den vorderen umschäumten Abschnitt des zweiten Dachmoduls) so aufeinander abgestimmt, dass das vordere und hintere Dachmodul sicher und zuverlässig koppelbar sind und in dem ausgebildeten Moduldach einen bündigen Übergang einander angrenzender Flächen und Kanten realisieren. Das Moduldach repräsentiert somit als Vorstufe eine vorgefertigte Baueinheit für ein betriebsbereites Fahrzeugdach, welches dadurch realisiert wird, dass das ausgebildete Moduldach mit einer dafür vorgesehenen Karosserie eines Kraftfahrzeugs gekoppelt wird.

Die Umschäumung an dem zweiten Dachmodul ist insbesondere auf das Rahmenelement des ersten Dachmoduls abgestimmt und beispielsweise bezogen auf die Längsachse länglicher ausgestaltet als es bei einer üblichen Ausbildung eines umschäumten Dachmoduls der Fall ist, um eine vergrößerte Anlagefläche zu dem zu koppelnden Rahmenelement zu realisieren und zu einer stabilen und sicheren Verbindung der beiden Dachmodule in dem Moduldach beizutragen. Darüber hinaus kann die Umschäumung oder eine weitere Umschäumung an den Seiten und/oder an einer hinteren Kante des zweiten Dachmoduls auf eine Tiefe des ersten Dachmoduls inklusive des Rahmenelements angepasst werden, um bei einem Ausbilden des Moduldachs und Anbinden an einer Karosserie des Kraftfahrzeugs ein bündiges und ästhetisch ansprechendes Endergebnis des Fahrzeugdachs auszubilden. In diesem Zusammenhang ist die Tiefe im Wesentlichen auf eine vertikale Erstreckungsrichtung der jeweiligen Komponenten bezogen, die senkrecht zu dem an einer Karosserie des Kraftfahrzeugs angebrachten Fahrzeugdach orientiert ist.

Mittels des beschriebenen Verfahrens sind das Moduldach und das korrespondierende Fahrzeugdach auf einfache und kostengünstige Weise realisierbar. Es werden zum Beispiel keine kostspieligen Werkzeuge benötigt, wie dies üblicherweise der Fall ist, wenn ein gemeinsames Rahmenelement für beide Dachmodule gefertigt wird, welches bezogen auf eine Aufsicht in seiner Form einer Acht ähnelt. Dadurch, dass lediglich das vordere Dachmodul ein Rahmenelement, beispielsweise in Ausführung eines Stahlrahmens, aufweist, wird außerdem eine signifikante Materialersparnis erreicht, welche sich weiter vorteilhaft auf die Kosten zum Herstellen des Moduldachs und des Fahrzeugdachs auswirkt. Wird beispielsweise aus einem plattenförmigen Rohmaterial ein gemeinsamer, einstückiger Rahmen für zwei Dachmodule ausgebildet, so ist das Material des Rahmens, welches für die Aussparungen der jeweiligen Dachelemente aus dem Rohmaterial entfernt wird, ein Ausschuss, der mittels des beschriebenen Verfahrens vermieden wird.

Außerdem ermöglicht das beschriebene Verfahren aufgrund der Kopplung zwischen dem ersten Dachmodul mit Rahmenelement und dem zweiten rahmenlosen Dachmodul eine platzsparende Konstruktion des Fahrzeugdachs. Da auf ein Rahmenelement für das zweite Dachmodul verzichtet wird, können das Moduldach und das korrespondierende Fahrzeugdach insbesondere bezogen auf eine Tiefe des zweiten Dachmoduls flach ausgestaltet werden und somit zu einem vergrößerten Freiraum in einer Fahrgastzelle des Kraftfahrzeugs beitragen.

Das beschriebene Verfahren und der damit ausbildbare Aufbau des Moduldachs ermöglichen weiter eine vorteilhafte Variabilität zum Ausbilden des Fahrzeugdachs. Es ist nicht erforderlich, einen vollständigen Rahmen auszubilden und auf eine dafür vorgesehene Karosserie eines Kraftfahrzeugs abzustimmen, sondern es bedarf lediglich einer einfachen Anpassung des zweiten Dachmoduls beziehungsweise der ausgebildeten Umschäumung an dem zweiten Dachmodul an vorgegebene Karosserieeigenschaften des Kraftfahrzeugs. Ein solches simples Anpassen des hinteren Dachmoduls wirkt sich weiter vorteilhaft auf eine kostengünstige Konstruktion des Fahrzeugdachs für das Kraftfahrzeug aus. Darüber hinaus trägt das ausbildbare Moduldach zu einer erhöhten Steifigkeit des Fahrzeugdachs bei, da das zweite Dachmodul ohne Stahlrahmen direkt mit der Karosserie des Kraftfahrzeugs gekoppelt werden kann.

Gemäß einer Weiterbildung des Verfahrens umfasst das Koppeln des ersten Dachmoduls mit dem zweiten Dachmodul ein Verkleben des ersten Dachmoduls mit dem umschäumten Rand des zweiten Dachmoduls. Bei einem solchen Verkleben wird zum Beispiel eine Kleberaupe auf dem hinteren Abschnitt des Rahmenelements und/oder der umschäumten vorderen Kante des hinteren Dachmoduls aufgetragen und die beiden Dachmodule werden relativ zueinander ausgerichtet und miteinander verbunden. Dabei erstrecken sich die eine oder mehrere Kleberaupen entlang der hinteren Kante des Rahmenelements beziehungsweise entlang der vorderen umschäumten Kante des hinteren Dachmoduls und gegebenenfalls auch noch seitlich entlang der zugehörigen Längsseiten des Rahmenelements beziehungsweise des zweiten Dachmoduls.

Gemäß einer Weiterbildung des Verfahrens umfasst das Koppeln des ersten Dachmoduls mit dem zweiten Dachmodul ein Verschrauben des ersten Dachmoduls mit dem zweiten Dachmodul. Ein Verschrauben der beiden Dachmodule miteinander kann zusätzlich zu dem zuvor beschriebenen Verkleben erfolgen und beispielsweise im Bereich der vorderen Umschäumung durchgeführt werden. Die Umschäumung weist zum Beispiel an vorgegebenen Positionen Gewindeeinlässe auf, die bei dem Umschäumungsprozess mit in die Umschäumung eingebracht wurden, um ein zusätzliches Verschrauben der Dachmodule zu ermöglichen und zu einen zuverlässigen und stabilen Aufbau des Moduldachs beizutragen.

Gegebenenfalls weist das zweite Dachmodul zu der vorderen oder umlaufenden Umschäumung eine weitere Umschäumung auf, die von der am Rand des zweiten Dachmoduls ausgebildeten Umschäumung beabstandet ausgebildet ist und ein Verschrauben der beiden Dachmodule ermöglicht. Darüber hinaus können zum Verstärken des hinteren Dachmoduls Querstreben oder Verstärkungselemente eingesetzt werden, welche variabel positionierbar sowie materialsparend und kostengünstig herstellbar sind. Solche Verstärkungselemente können zu einer stabilen und sicheren Kopplung sowohl der beiden Dachmodule miteinander als auch des Moduldachs mit einer Karosserie des Kraftfahrzeugs beitragen.

Gemäß einer Weiterbildung umfasst das Verfahren ein Koppeln einer Führungsschiene mit dem ersten und/oder dem zweiten Dachmodul zum Führen eines relativ zu dem zweiten Dachmodul beweglichen Dachelements. Mittels dieser Weiterbildung wird das ausbildbare Moduldach um eine oder mehrere Führungsschienen erweitert, die beispielsweise bezogen auf die Fahrzeuglängsachse eines betriebsbereiten Kraftfahrzeugs beidseitig an einer Unterseite des vorderen und/oder hinteren Dachmoduls angebracht sind. Die jeweilige Unterseite bezeichnet dabei die Seite der Dachmodule, die in einem betriebsbereiten Zustand des Fahrzeugdachs und des Kraftfahrzeugs dem Fahrzeuginnenraum beziehungsweise der Fahrgastzelle zugewandt sind.

Zum Beispiel ermöglichen die Führungsschienen ein Öffnen, Verschieben und Verschließen des Dachelements des ersten Dachmoduls. Alternativ oder zusätzlich können die Führungsschiene zum Betreiben einer Verdunklungsvorrichtung und Führen eines Rollos oder eines Schiebehimmels ausgebildet sein, welche ein wahlweises Abschatten des Fahrzeuginnenraums ermöglichen. Insbesondere kann beidseitig jeweils eine gemeinsame Führungsschiene mit dem vorderen und/oder hinteren Dachmodul gekoppelt sein, um ein Führen eines beweglichen Dachelementes bis in den Bereich des jeweils anderen Dachmoduls zu ermöglichen. Somit kann zum Beispiel ein Überführen des Dachelements des vorderen Dachmoduls über das hintere Dachmodul ermöglicht werden oder ein Abschatten der Unterseite des vorderen Dachmoduls ausgehend von einem Fahrzeugheck nahe einer Hinterkante des hinteren Dachmoduls.

Gemäß einer Weiterbildung umfasst das Verfahren ein Koppeln des Moduldachs mit einer Karosserie des Kraftfahrzeugs und dadurch Ausbilden des Fahrzeugdachs. Diese Weiterbildung spezifiziert das Verfahren dahingehend, dass das zuvor beschriebene Moduldach als vorgefertigte Baueinheit in einem weiteren Schritt mit einer vorgesehenen Karosserie des Kraftfahrzeugs gekoppelt wird und dadurch ein Fahrzeugdach des Kraftfahrzeugs ausbildet.

Gemäß einer Weiterbildung des Verfahrens umfasst das Koppeln des Moduldachs mit der Karosserie des Fahrzeugdachs ein Verkleben des Moduldachs mit der Karosserie des Fahrzeugdachs. Ein solches Verkleben kann gemäß dem zuvor beschriebenen Verkleben der beiden Dachmodule miteinander mittels einer weiteren Kleberaupe erfolgen, die als separate Kleberaupe vollumfänglich an der Karosserie des Kraftfahrzeugs und/oder einer Unterseite des Moduldachs aufgetragen wird. Beispielsweise ist die Kleberaupe, welche die beiden Dachmodule miteinander koppelt, an einer Oberseite des Rahmenelements und die weitere Kleberaupe, die das Moduldach mit der Karosserie koppelt, an einer Unterseite des Rahmenelements angeordnet. Bezogen auf einen vertikalen Querschnitt entlang der Längsachse des Moduldachs sind die Kleberaupen zumindest in dem Bereich der Kopplungsschnittstelle zwischen vorderem und hinterem Dachmodul voneinander beabstandet ausgebildet beziehungsweise angeordnet. Insbesondere kann das Moduldach als vorgefertigte Baueinheit realisiert werden, sodass die beschriebenen Kleberaupen zeitlich nacheinander ausgebildet werden und zueinander komplett separate Kleberaupen ausbilden.

Ein erfindungsgemäßes Moduldach für ein Fahrzeugdach für ein Kraftfahrzeug umfasst ein erstes Dachmodul mit einem Rahmenelement und einem Dachelement, das relativ zu dem Rahmenelement beweglich mit dem Rahmenelement gekoppelt ist, um beispielsweise eine Öffnung in dem Fahrzeugdach wahlweise freigeben und verschließen zu können. Das Rahmenelement ist als tragendes Kopplungselement für das erste Dachmodul ausgebildet, um das erste Dachmodul an einer Karosserie des Kraftfahrzeugs anbringen zu können. Das Moduldach umfasst weiter ein tragrahmenloses, zu dem ersten Dachmodul separates zweites Dachmodul, das an einem Rand eine vorgegebene Umschäumung aufweist, mittels derer das zweite Dachmodul bezogen auf eine Längsachse des Moduldachs mit einem hinteren Abschnitt des Rahmenelements des ersten Dachmoduls gekoppelt ist.

Das Moduldach für ein Fahrzeugdach ist insbesondere mittels eines der zuvor beschriebenen Verfahren herstellbar, sodass sämtliche Merkmale und Eigenschaften des Verfahrens zum Herstellen eines Fahrzeugdachs auch für das Moduldach offenbart sind und umgekehrt.

Gemäß einer Weiterbildung des Moduldachs weist das Rahmenelement des ersten Dachmoduls in dem hinteren Abschnitt zwei vorspringende Bereiche auf, mittels derer das erste Dachmodul mit dem zweiten Dachmodul gekoppelt ist. Gemäß einer Weiterbildung des Moduldachs ist das erste Dachmodul mittels des hinteren Abschnitts des Rahmenelements mit dem umschäumten Rand des zweiten Dachmoduls verklebt.

Das Rahmenelement des ersten vorderen Dachmoduls und die Umschäumung an dem vorderen Rand des hinteren Dachmoduls sind nutzbringend so aufeinander abgestimmt, dass eine stabile und zuverlässige Kopplung der beiden Dachmodule miteinander ausbildbar ist. Die vorspringenden Bereiche realisieren verlängerte Abschnitte an der hinteren Kante des Rahmenelements, um insbesondere eine vergrößerte Kopplungsschnittstelle zwischen den beiden zu koppelnden Dachmodulen zu ermöglichen und somit einen Beitrag zu einem sicheren und stabilen Aufbau des Moduldachs zu leisten.

Ein erfindungsgemäßes Fahrzeugdach umfasst ein Moduldach nach einer der zuvor beschriebenen Ausbildungen, welches mittels Verkleben mit einer Karosserie eines Kraftfahrzeugs gekoppelt ist. Entsprechend sind sämtliche Merkmale und Eigenschaften des zuvor beschriebenen Moduldachs und Verfahrens auch für das Fahrzeugdach offenbart.

Ausführungsbeispiele der Erfindung sind im Folgenden anhand der schematischen Zeichnungen näher erläutert. Es zeigen:
- Figur 1: ein Fahrzeugdach in einer perspektivischen Ansicht,
- Figur 2: ein Ausführungsbeispiel einer Kopplung eines ersten Dachmoduls mit einem zweiten Dachmodul,
- Figur 3: ein Ausführungsbeispiel einer Kopplung des zweiten Dachmoduls mit einer Karosserie eines Kraftfahrzeugs,
- Figuren 4A-4B: ein Ausführungsbeispiel eines Moduldachs für das Fahrzeugdachs eines Kraftfahrzeugs,
- Figur 5: ein Ausführungsbeispiel von Komponenten für das erste und zweite Dachmodul,
- Figuren 6A-6C: ein weiteres Ausführungsbeispiel einer Kopplung des ersten und zweiten Dachmoduls in verschiedenen Ansichten,
- Figur 7: ein weiteres Ausführungsbeispiel einer Kopplung des ersten und zweiten Dachmoduls in perspektivischer Ansicht.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit Bezugszeichen gekennzeichnet.

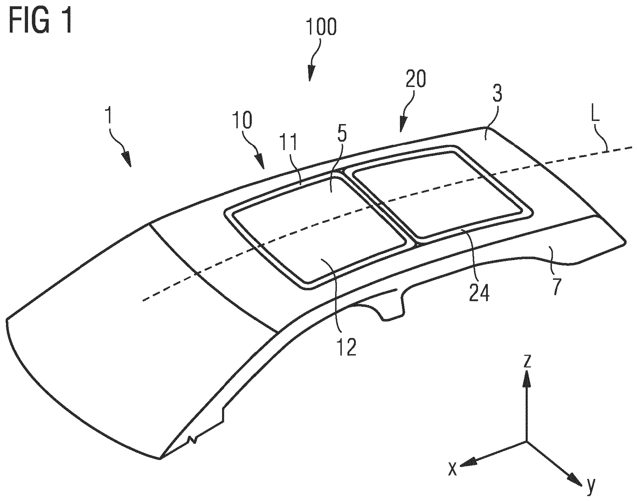

Figur 1 zeigt in einer perspektivischen Ansicht schematisch ein Kraftfahrzeug 1 mit einem Fahrzeugdach 3, das ein erstes Dachmodul 10 und ein zweites Dachmodul 20 aufweist. Bezogen auf eine Längsachse L und eine übliche Fahrtrichtung des betriebsbereiten Kraftfahrzeugs 1 kann das erste Dachmodul 10 auch als vorderes und das zweite Dachmodul 20 auch als hinteres Dachmodul bezeichnet werden. Darüber hinaus beziehen sich Begriffe wie "oben" und "unten" sowie "Oberseite" und "Unterseite" auf eine vertikale Orientierung beziehungsweise Ausrichtung der jeweiligen Komponenten gemäß der eingezeichneten z-Richtung im Wesentlichen senkrecht zu dem betriebsbereiten Fahrzeugdach 3.

Das erste Dachmodul 10 weist ein Rahmenelement 11 und ein Dachelement 12 auf, welches relativ zu dem Rahmenelement 11 beweglich mit dem Rahmenelement 11 gekoppelt ist, um eine Öffnung 5 in dem Fahrzeugdach 3 wahlweise freigeben und verschließen zu können. Das zweite Dachelement 20 weist eine Umschäumung 24 auf, mittels derer es mit dem Rahmenelement 11 des vorderen Dachmoduls 10 gekoppelt ist. Das zweite Dachmodul 20 ist beispielsweise als Festglaselement mit einem Glasdeckel 26 realisiert und somit unbeweglich relativ zu dem Fahrzeugdach 3 ausgebildet.

Das vordere erste Dachmodul 10 und das hintere zweite Dachmodul 20 sind miteinander gekoppelt und realisieren ein Moduldach 100, welches in Anbindung an eine Karosserie 7 des Kraftfahrzeugs 1 das Fahrzeugdach 3 ausbilden. Wie anhand der nachfolgenden Figuren erläutert wird, können das Moduldach 100 und das korrespondierende Fahrzeugdach 3 auf einfache und zeitsparende Weise hergestellt werden und können zudem zu einer deutlichen Ersparnis des bei der Fertigung benötigten Material- und Kostenaufwands beitragen. Darüber hinaus kann das Moduldach 100 in Abstimmung auf die vorgesehene Karosserie 7 des Kraftfahrzeugs 1 kostengünstig und aufwandsarm ausgebildet werden und trägt insbesondere aufgrund der Kopplung der Dachmodule 10 und 20 zu einem platzsparenden Aufbau des Fahrzeugdachs 3 bei.

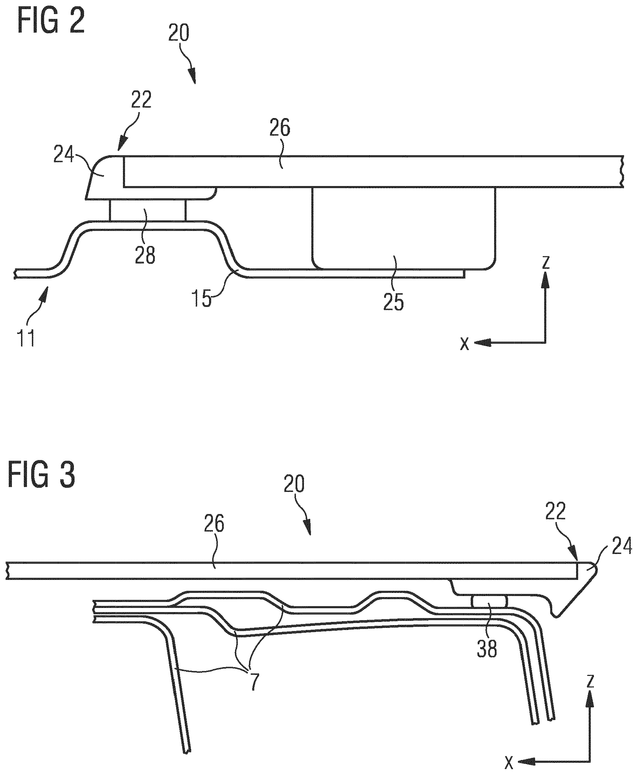

Figur 2 illustriert in einer seitlichen Schnittansicht eine Kopplungsschnittstelle zwischen dem ersten Dachmodul 10 und dem zweiten Dachmodul 20. Das zweite Dachmodul 20 weist insbesondere an einer vorderen Kante 22 die Umschäumung 24 auf, mittels derer das hintere Dachmodul 20 mit dem vorderen Dachmodul 10 gekoppelt ist. Die Umschäumung 24 ist bezogen auf die Längsachse L (x-Richtung) länglich ausgebildet, sodass das zweite Dachmodul 20 zuverlässig mittels einer Verklebung 28 mit einem hinteren Abschnitt 13 des Rahmenelements 11 verbunden ist. Um weiter zu einer stabilen, sicheren und zuverlässigen Kopplung zwischen den beiden Dachmodulen 10 und 20 beizutragen, weist das Rahmenelement 11 in dem hinteren Bereich 13 einen oder mehrere vorspringende Bereiche 15 auf. Der oder die vorspringenden Bereiche 15 realisieren verlängerte Abschnitte an der hinteren Kante des Rahmenelements 11 und bilden eine vergrößerte Kopplungsschnittstelle zwischen den gekoppelten Dachmodulen 10 und 20 aus.

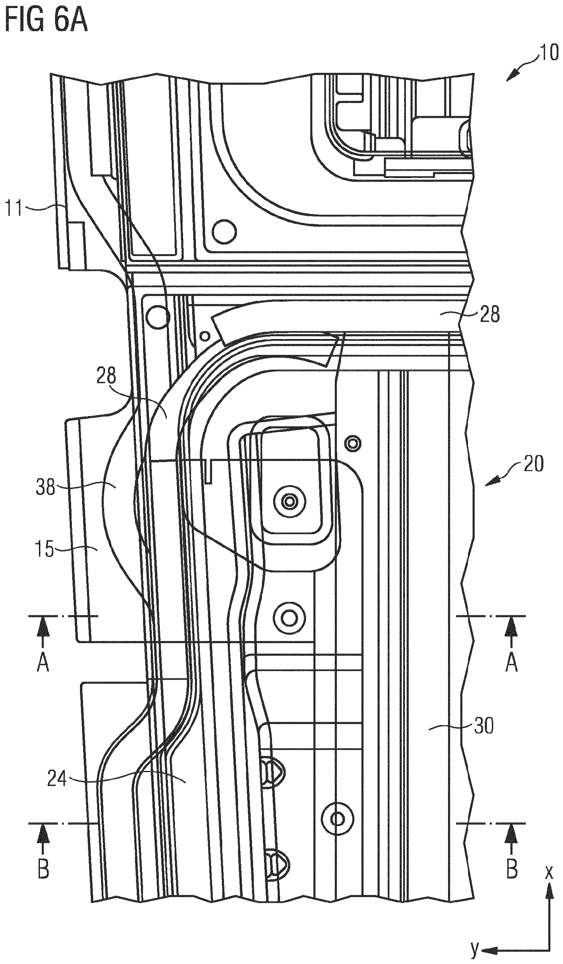

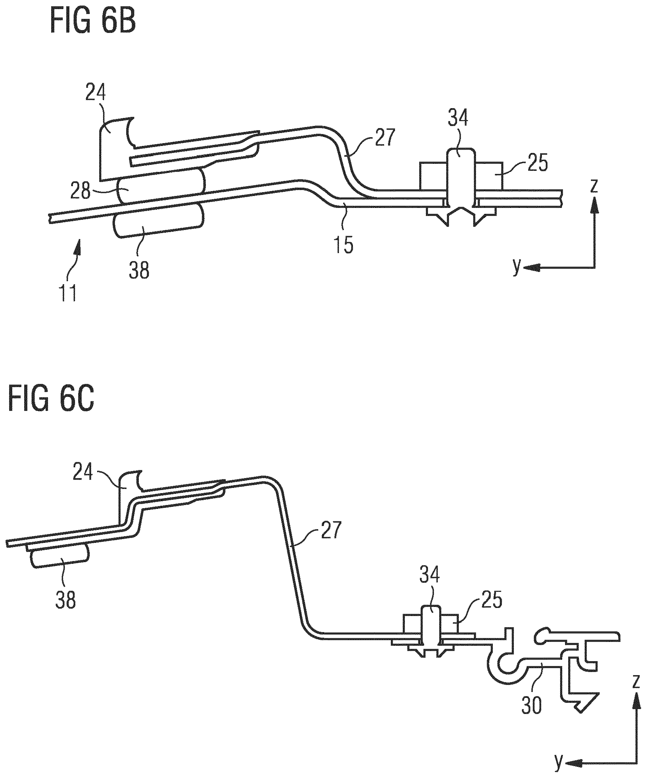

Die Umschäumung 24 kann an dem vorderen Rand 22 des zweiten Dachmoduls 20 ausgebildet sein oder als vollumfänglicher Umschäumungsrahmen an dem Rand 22 des zweiten Dachmoduls 20 ausgestaltet sein. Ein solcher Umschäumungsrahmen ist aber hinsichtlich Funktion und Eigenschaften von dem Rahmenelement 11 des ersten Dachmoduls 10 zu unterscheiden. Eine zusätzlich seitlich ausgebildete Umschäumung 24 kann eine Aufnahmemöglichkeit für Führungselemente, wie Führungsschienen 30 (vgl. Figuren 6A und 6C), ausbilden und insbesondere eine Anbindung des zweiten Dachmoduls 20 an der Karosserie 7 des Kraftfahrzeugs 1 ermöglichen.

In dem in Figur 2 gezeigten Ausführungsbeispiel weist das zweite Dachmodul 20 außerdem beabstandet zu der Umschäumung 24 eine weitere Umschäumung 25 auf, welche eine verstärkte Kopplung zwischen den beiden Dachmodulen 10 und 20 ermöglicht und zu einem zuverlässigen und sicheren Aufbau des Moduldachs 100 beiträgt. Die weitere Umschäumung 25 weist zum Beispiel an vorgegebenen Positionen Gewindeeinlässe auf, die bei dem jeweiligen Umschäumungsprozess mit in die Umschäumung 25 eingebracht wurden, um zusätzlich zu dem Verkleben 28 ein Verschrauben 34 der Dachmodule 10 und 20 zu ermöglichen (vgl. Figuren 6B und 6C). Alternativ oder zusätzlich kann ein Verschrauben auch im Bereich der Umschäumung 24 vorgehsehen werden.

Figur 3 illustriert in einer seitlichen Schnittdarstellung eine Schnittstelle zwischen dem zweiten Dachmodul 20 in einem Bereich des Fahrzeughecks des Kraftfahrzeugs 1. Das zweite Dachmodul 20 ist mittels der Umschäumung 24 und mittels einer Verklebung 38 direkt mit der Karosserie 7 des Kraftfahrzeugs 1 gekoppelt und trägt somit zu einer erhöhten Steifigkeit des Fahrzeugdachs 3 bei. Auch in diesem Bereich ist die Umschäumung 24 derart ausgebildet und auf die Karosserie 7 des Kraftfahrzeugs 1 abgestimmt, dass ein zuverlässiges und stabiles Koppeln des hinteren Dachmoduls 20 und des

Moduldachs 100 mittels der Verklebung 38 mit der Karosserie 7 möglich ist. Bezogen auf die Längsachse L des Fahrzeugdachs 3 beziehungsweise des Moduldachs 100 kann Umschäumung 24 in dem illustrierten Querschnitt als länglich ausgebildet bezeichnet werden.

Anhand der in Figur 3 gezeigten Darstellung ist ersichtlich, dass das zweite Dachmodul 20 kein Rahmenelement wie das erste Dachmodul 10 aufweist und somit zu einer platzsparenden Konstruktion des Fahrzeugdachs 3 beiträgt. Das Moduldach 100 und das korrespondierende Fahrzeugdach 3 können insbesondere bezogen auf eine Tiefe (im Wesentlichen in vertikaler Erstreckungsrichtung gemäß der eingezeichneten z-Richtung) des zweiten Dachmoduls 20 flach ausgestaltet werden und somit einen vergrößerten Freiraum in einer Fahrgastzelle des Kraftfahrzeugs 1 ermöglichen.

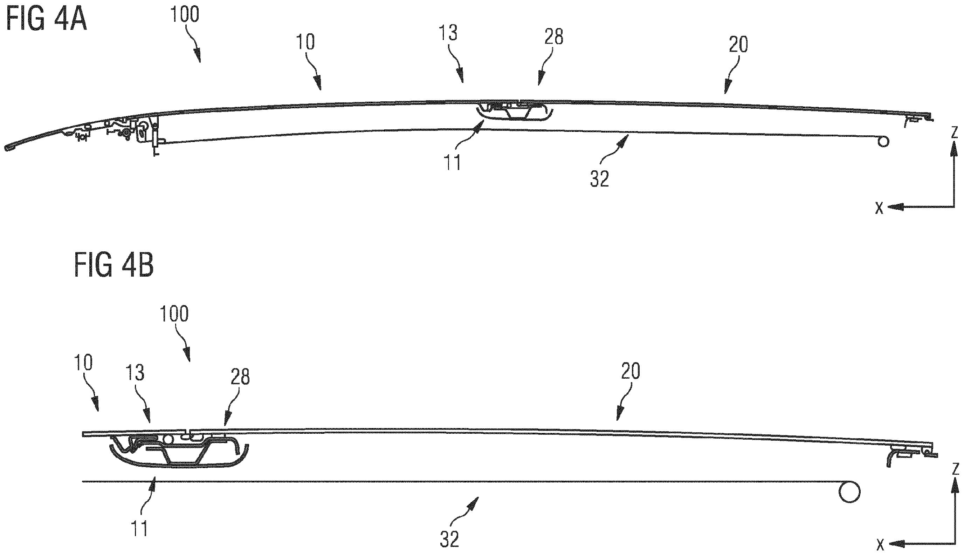

Figuren 4A und 4B illustrieren ein weiteres Ausführungsbeispiel des Moduldachs 100 in einer seitlichen Schnittdarstellung. In diesem Ausführungsbeispiel umfasst das Moduldach 100 eine Verdunklungsvorrichtung 32, die auf Wunsch ein Abschatten des Fahrzeuginnenraums des Kraftfahrzeugs ermöglicht, um ein Eintreten von Licht durch das erste oder zweite Dachmodul 10 oder 20 in die Fahrgastzelle zu reduzieren. Beispielsweise sind bezogen auf die Längsachse L beidseitig Führungsschienen 30 mit dem ersten und/oder zweiten Dachmodul 10 und/oder 20 gekoppelt, die ein zuverlässiges Betreiben der Verdunklungsvorrichtung 32 und Führen eines Rollos oder eines Schiebehimmels ermöglichen. Hinsichtlich einer Fahrzeugseite des Kraftfahrzeugs kann eine solche Führungsschiene 30 auch als eine gemeinsame Führungsschiene mit dem vorderen und/oder hinteren Dachmodul 10 und/oder 20 gekoppelt sein, um ein Führen eines beweglichen Dachelementes, wie das Dachelement 12 oder ein Abschattungselement der Verdunkelungsvorrichtung 32, bis in den Bereich des jeweils anderen Dachmoduls zu ermöglichen.

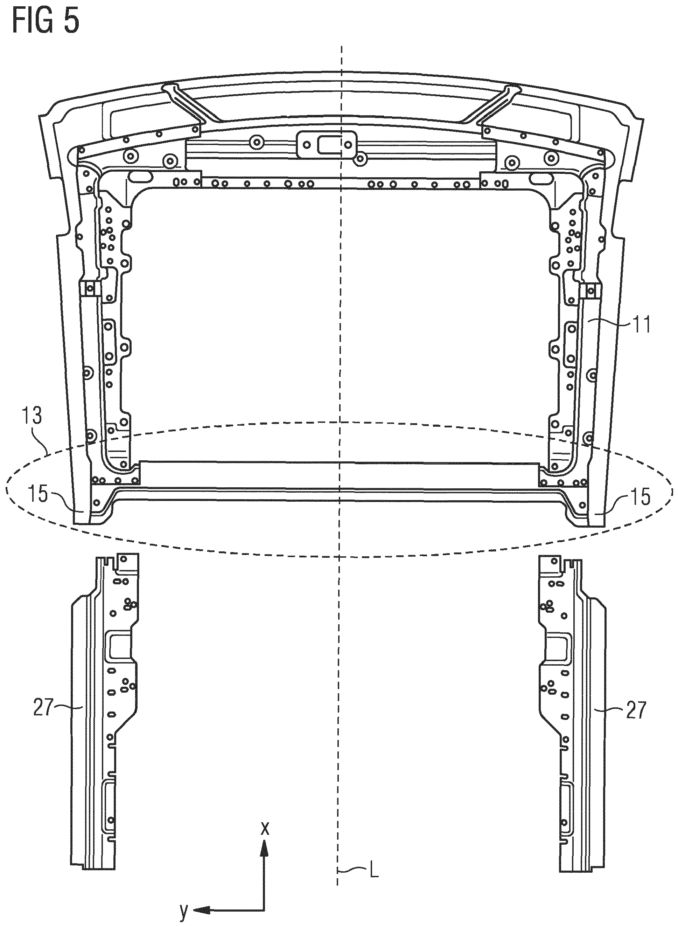

Figur 5 zeigt in einer Aufsicht beispielhafte Ausgestaltungen von Komponenten des ersten und zweiten Dachmoduls 10 und 20. Das Rahmenelement 11 ist zum Beispiel als metallischer Rahmen, insbesondere Stahlrahmen, realisiert und weist in dem hinteren Abschnitt 13 zwei verlängerte vorspringende Bereiche 15 auf, die sich vorteilhaft auf eine zuverlässige und sichere Koppelung der beiden Dachmodule 10 und 20 auswirken und zu einem stabilen Moduldach 100 beitragen.

Das zweite Dachmodul 20 umfasst gemäß diesem Ausführungsbeispiel seitlich angeordnete Verstärkungselemente 27, die zu einem sicheren und zuverlässigen Anbinden des hinteren Dachmoduls 20 und des Moduldachs 100 an der Karosserie 7 des Kraftfahrzeugs 1 beitragen können. Zusätzlich können die Verstärkungselemente 27 mittels Verkleben und/oder Verschrauben mit den verlängerten Bereichen 15 des Rahmenelements 11 gekoppelt werden, um ein besonders stabiles Moduldach 100 auszubilden.

Die Figuren 6A bis 6C zeigen verschiedene Positionen der Kopplungsschnittstelle zwischen dem ersten und dem zweiten Dachmodul 10 und 20 in verschiedenen Ansichten. Figur 6A illustriert in einer Aufsicht das erste Dachmodul 10, das im hinteren Abschnitt 13 des Rahmenelements 11 mittels der Verklebung 28 mit dem zweiten Dachmodul 20 gekoppelt ist. Darüber hinaus ist das Moduldach 100 mittels einer separaten Verklebung 38 mit der Karosserie 7 des Kraftfahrzeugs 1 gekoppelt. Außerdem ist in Figur 6A eine Führungsschiene 30 illustriert, die zum Beispiel ein Führen eines Abschattungselements gemäß den Figuren 4A und 4B ermöglicht.

Figur 6B illustriert eine schematische Schnittdarstellung entlang der gestrichelt dargestellten Linie AA in Figur 6A. Gemäß diesem Ausführungsbeispiel sind die Verstärkungselemente 27 an einem Rand von der Umschäumung 24 umgeben und mittels der Verklebung 28 mit dem Rahmenelement 11 verbunden. Die vorspringenden Bereiche 15 des Rahmenelements 11 sind zusätzlich mit den Verstärkungselementen 27 verschraubt. Eine solche Verschraubung 34 kann beispielsweise in oder durch die weitere Umschäumung 25 ausgebildet werden.

Anhand Figur 6B ist zu erkennen, dass die Verklebung 28, welche die beiden Dachmodule 10 und 20 miteinander koppelt, an einer Oberseite des Rahmenelements 11 und die weitere Verklebung 38, die das Moduldach 100 mit der Karosserie 7 koppelt, an einer Unterseite des Rahmenelements 11 angeordnet ist und als zueinander separate Kleberaupen ausgebildet sind. Bezogen auf eine Vertikale senkrecht zur Längsachse L des Moduldachs 100 sind die Kleberaupen zumindest in dem Bereich der Kopplungsschnittstelle zwischen vorderem und hinterem Dachmodul 10 und 20 voneinander beabstandet ausgebildet beziehungsweise angeordnet.

Figur 6C zeigt eine schematische Schnittdarstellung entlang der gestrichelt dargestellten Linie BB in Figur 6A. Anhand dieser Darstellung ist ersichtlich, dass die Umschäumung 24 positionsabhängig vorgegeben ausgebildet ist, um insbesondere ein vorteilhaftes Koppeln der beiden Dachmodule 10 und 20 miteinander und ein Anbinden des Moduldachs 100 an der Karosserie 7 des Kraftfahrzeugs 1 zu ermöglichen. Außerdem ist eine Kopplung der Führungsschienen 30 an dem zweiten Dachmodul 20 beziehungsweise dem Verstärkungselement 27 mittels der Verschraubung 34 illustriert.

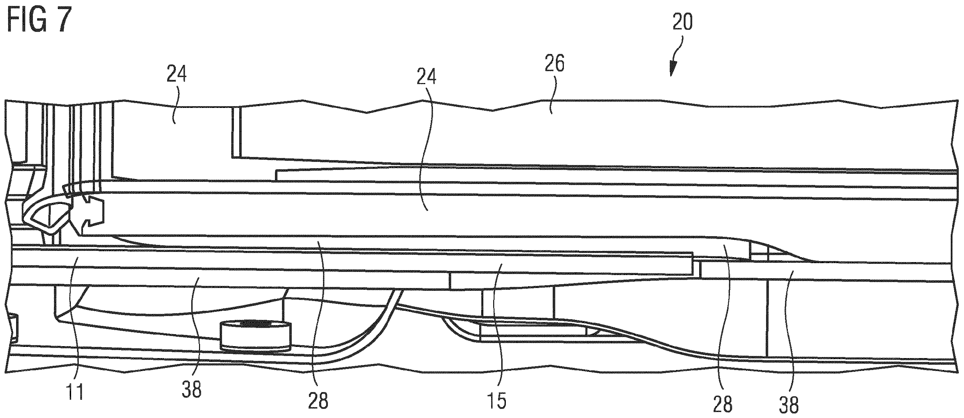

Figur 7 illustriert schematisch in einer weiteren, perspektivischen Ansicht den Bereich der Kopplungsschnittstelle zwischen dem ersten und zweiten Dachmodul 10 und 20. Die Umschäumung 24 ist sowohl an dem vorderen Rand 22 als auch an den seitlichen Rändern 22 des Glasdeckels 26 ausgebildet. Bezogen auf die Längsachse L des Moduldachs 100 ist die Umschäumung 24 in einem hinteren Bereich des zweiten Dachmoduls 20 tiefer ausgebildet mittels der Verklebung 38 direkt mit der Karosserie 7 des Kraftfahrzeugs 1 verbunden. Im Bereich der verlängerten Abschnitte 15 des Rahmenelements 11 ist die Umschäumung schmaler ausgestaltet, um insbesondere angepasst auf eine Form des vorderen Dachmoduls 10 ein bündiges und ästhetisch ansprechendes Endergebnis des gefertigten Moduldachs 100 auszubilden. Dabei ist an einem Ende der vorspringenden Bereiche 15 ein gewisser Freiraum vorhanden, bis in den sich die Verklebung 28 zwischen dem ersten und zweiten Dachmodul 10 und 20 erstreckt. In diesem Bereich ist ein gewisses Spiel vorhanden und die Umschäumung 24 ist in Richtung des Fahrzeughecks an ein Anbinden an die Karosserie 7 des Kraftfahrzeugs 1 angepasst.

## Patentansprüche

1. Verfahren zum Herstellen eines Fahrzeugdachs (3) für ein Kraftfahrzeug (1), umfassend:
- Bereitstellen eines ersten Dachmoduls (10) mit einem Rahmenelement (11) und einem Dachelement (12), das mit dem Rahmenelement (11) so gekoppelt ist, dass das Dachelement (12) relativ zu dem Rahmenelement (11) bewegbar ist, wobei das Rahmenelement (11) als tragendes Kopplungselement für das erste Dachmodul (10) ausgebildet ist, um das erste Dachmodul (10) an einer Karosserie des Kraftfahrzeugs (1) anbringen zu können;
- Bereitstellen eines tragrahmenlosen, zu dem ersten Dachmodul (10) separaten zweiten Dachmoduls (20),
- Umschäumen eines Rands (22) des zweiten Dachmoduls (20) an einer vorgegebenen Position, und
- Koppeln eines bezogen auf eine Längsachse (L) des Fahrzeugdachs (3) hinteren Abschnitts (13) des Rahmenelements (11) des ersten Dachmoduls (10) mit dem umschäumten Rand (22) des zweiten Dachmoduls (20) und dadurch Ausbilden eines Moduldachs (100).

2. Verfahren nach Anspruch 1, bei dem das Koppeln des ersten Dachmoduls (10) mit dem zweiten Dachmodul (20) umfasst:
Verkleben (28) des ersten Dachmoduls (10) mit dem umschäumten Rand (22) des zweiten Dachmoduls (20).

3. Verfahren nach Anspruch 1 oder 2, bei dem das Koppeln des ersten Dachmoduls (10) mit dem zweiten Dachmodul (20) umfasst:
Verschrauben (34) des ersten Dachmoduls (10) mit dem zweiten Dachmodul (20).

4. Verfahren nach einem der Ansprüche 1 bis 3, umfassend: Koppeln einer Führungsschiene (30) mit dem ersten und/oder dem zweiten Dachmodul (10, 20) zum Führen eines relativ zu dem zweiten Dachmodul (20) beweglichen Dachelements (12, 32).

5. Verfahren nach einem der Ansprüche 1 bis 4, umfassend: Koppeln des Moduldachs (100) mit einer Karosserie (7) des Kraftfahrzeugs (1) und dadurch Ausbilden des Fahrzeugdachs (3).

6. Verfahren nach Anspruch 5, bei dem das Koppeln des Moduldachs (100) mit der Karosserie (7) des Kraftfahrzeugs (1) umfasst:
Verkleben (38) des Moduldachs (100) mit der Karosserie (7) des Kraftfahrzeugs (1).

7. Moduldach (100) für ein Fahrzeugdach (3) für ein Kraftfahrzeug (1), umfassend:
- ein erstes Dachmodul (10) mit einem Rahmenelement (11) und einem Dachelement (12), das mit dem Rahmenelement (11) gekoppelt ist und das relativ zu dem Rahmenelement (11) bewegbar ausgebildet ist, wobei das Rahmenelement (11) als tragendes Kopplungselement für das erste Dachmodul (10) ausgebildet ist, um das erste Dachmodul (10) an einer Karosserie des Kraftfahrzeugs (1) anbringen zu können, und
- ein tragrahmenloses, zu dem ersten Dachmodul (10) separates zweites Dachmodul (20), das an einem Rand (22) eine vorgegebene Umschäumung (24) aufweist, mittels derer das zweite Dachmodul (20) bezogen auf eine Längsachse (L) des Moduldachs (100) mit einem hinteren Abschnitt (13) des Rahmenelements (11) des ersten Dachmoduls (10) gekoppelt ist.

8. Moduldach (100) nach Anspruch 7, bei dem das erste Dachmodul (10) mittels des hinteren Abschnitts (13) des Rahmenelements (11) mit dem umschäumten Rand (22) des zweiten Dachmoduls (20) verklebt ist.

9. Moduldach (100) nach Anspruch 7 oder 8, bei dem das Rahmenelement (11) in dem hinteren Abschnitt (13) zwei vorspringende Bereiche (15) aufweist, mittels derer das erste Dachmodul (10) mit dem zweiten Dachmodul (20) gekoppelt ist.

10. Fahrzeugdach (3), umfassend
- ein Moduldach (100) nach einem der Ansprüche 7 bis 9, das mittels Verkleben (38) mit einer Karosserie (7) eines Kraftfahrzeugs (1) gekoppelt ist.

## Claims

1. Method for producing a vehicle roof (3) for a motor vehicle (1), comprising:
- providing of a first roof module (10) with a frame element (11) and a roof element (12) which is coupled to the frame element (11) in such a way that the roof element (12) can be moved relative to the frame element (11), the frame element (11) being configured as a supporting coupling element for the first roof module (10), in order for it to be possible for the first roof module (10) to be attached to a body of the motor vehicle (1);
- providing of a second roof module (20) which is separate from the first roof module (10) and does not have a load-bearing frame,
- encasing of an edge (22) of the second roof module (20) at a predefined position with foam, and
- coupling of a rear (in relation to a longitudinal axis (L) of the vehicle roof (3)) section (13) of the frame element (11) of the first roof module (10) to that edge (22) of the second roof module (20) which is encased with foam, and, as a result, configuring of a modular roof (100).

2. Method according to Claim 1, in the case of which the coupling of the first roof module (10) to the second roof module (20) comprises:
adhesive bonding (28) of the first roof module (10) to that edge (22) of the second roof module (20) which is encased with foam.

3. Method according to Claim 1 or 2, in the case of which the coupling of the first roof module (10) to the second roof module (20) comprises:
screwing (34) of the first roof module (10) to the second roof module (20).

4. Method according to one of Claims 1 to 3, comprising:
coupling of a guide rail (30) to the first and/or the second roof module (10, 20) in order to guide a roof element (12, 32) which can be moved relative to the second roof module (20).

5. Method according to one of Claims 1 to 4, comprising:
coupling of the modular roof (100) to a body (7) of the motor vehicle (1), and, as a result, configuring of the vehicle roof (3).

6. Method according to Claim 5, in the case of which the coupling of the modular roof (100) to the body (7) of the motor vehicle (1) comprises:
adhesive bonding (38) of the modular roof (100) to the body (7) of the motor vehicle (1).

7. Modular roof (100) for a vehicle roof (3) for a motor vehicle (1), comprising:
- a first roof module (10) with a frame element (11) and a roof element (12) which is coupled to the frame element (11) and which is configured such that it can be moved relative to the frame element (11), the frame element (11) being configured as a supporting coupling element for the first roof module (10), in order for it to be possible for the first roof module (10) to be attached to a body of the motor vehicle (1), and
- a second roof module (20) which is separate from the first roof module (10), does not have a load-bearing frame, and has, at one edge (22), a predefined portion (24) which is encased with foam, by means of which the second roof module (20) is coupled to a rear section (13) of the frame element (11) of the first roof module (10) in relation to a longitudinal axis (L) of the modular roof (100).

8. Modular roof (100) according to Claim 7, in the case of which the first roof module (10) is adhesively bonded by means of the rear section (13) of the frame element (11) to that edge (22) of the second roof module (20) which is encased with foam.

9. Modular roof (100) according to Claim 7 or 8, in the case of which the frame element (11) has, in the rear section (13), two projecting regions (15), by means of which the first roof module (10) is coupled to the second roof module (20).

10. Vehicle roof (3), comprising
- a modular roof (100) according to one of Claims 7 to 9 which is coupled by means of adhesive bonding (38) to a body (7) of a motor vehicle (1).

## Revendications

1. Procédé de fabrication d'un toit de véhicule (3) destiné à un véhicule automobile (1), le procédé comprenant les opérations suivantes :
- prévoir un premier module de toit (10) pourvu d'un élément de cadre (11) et d'un élément de toit (12) qui est accouplé à l'élément de cadre (11) de telle sorte que l'élément de toit (12) puisse être déplacé par rapport à l'élément de cadre (11), l'élément de cadre (11) étant conçu comme un élément d'accouplement porteur destiné au premier module de toit (10) pour pouvoir fixer le premier module de toit (10) à une carrosserie du véhicule automobile (1) ;
- fournir un deuxième module de toit (20) dépourvu de cadre de toit porteur et distinct du premier module de toit (10),
- entourer de mousse un bord (22) du deuxième module de toit (20) à une position prédéterminée, et
- accoupler une portion arrière (13) de l'élément de cadre (11) du premier module de toit (10) par rapport à un axe longitudinal (L) du toit de véhicule (3), au bord (22), entouré de mousse, du deuxième module de toit (20) et former ainsi un toit modulaire (100).

2. Procédé selon la revendication 1, l'opération d'accouplement du premier module de toit (10) au deuxième module de toit (20) comprenant l'opération suivante :
coller (28) le premier module de toit (10) au bord (22), entouré de mousse, du deuxième module de toit (20) .

3. Procédé selon la revendication 1 ou 2, l'opération d'accouplement du premier module de toit (10) au deuxième module de toit (20) comprenant l'opération suivante :
visser (34) le premier module de toit (10) au deuxième module de toit (20).

4. Procédé selon l'une des revendications 1 à 3, le procédé comprenant les opérations suivantes :
accoupler un rail de guidage (30) au premier et/ou au deuxième module de toit (10, 20) pour guider un élément de toit (12, 32) qui est mobile par rapport au deuxième module de toit (20).

5. Procédé selon l'une des revendications 1 à 4, comprenant l'opération suivante :
accoupler le toit modulaire (100) à une carrosserie (7) du véhicule automobile (1) et former ainsi le toit de véhicule (3).

6. Procédé selon la revendication 5, l'opération d'accouplement du toit modulaire (100) à la carrosserie (7) du véhicule automobile (1) comprenant l'opération suivante :
coller (38) le toit modulaire (100) à la carrosserie (7) du véhicule automobile (1).

7. Toit modulaire (100) destiné au toit (3) du véhicule automobile (l) et comprenant :
- un premier module de toit (10) pourvu d'un élément de cadre (11) et d'un élément de toit (12) qui est accouplé à l'élément de cadre (11) et qui est conçu pour être mobile par rapport à l'élément de cadre (11),
l'élément de cadre (11) étant conçu comme un élément d'accouplement porteur destiné au premier module de toit (10) pour pouvoir fixer le premier module de toit (10) à une carrosserie du véhicule automobile (1), et
- un deuxième module de toit (20) qui est dépourvu de cadre porteur et séparé du premier module de toit (10) et qui comporte sur un bord (22) un entourage en mousse prédéterminé (24) au moyen duquel le deuxième module de toit (20) est accouplé à une portion arrière (13) de l'élément de cadre (11) du premier module de toit (10) par rapport à un axe longitudinal (L) du toit modulaire (100).

8. Module de toit (100) selon la revendication 7, dans lequel le premier module de toit (10) est collé au moyen de la portion arrière (13) de l'élément de cadre (11) au bord (22), entouré de mousse, du deuxième module de toit (20).

9. Module de toit (100) selon la revendication 7 ou 8, dans lequel l'élément de cadre (11) comporte dans la portion arrière (13) deux zones saillantes (15) au moyen desquelles le premier module de toit (10) est accouplé au deuxième module de toit (20).

10. Toit de véhicule (3) comprenant
- un toit modulaire (100) selon l'une des revendications 7 à 9, qui est accouplé à une carrosserie (7) d'un véhicule automobile (1) au moyen d'un collage (38).
